# EUROPÄISCHE PATENTSCHRIFT

(11) **EP 1 317 356 B1**
(45) Veröffentlichungstag und Bekanntmachung des Hinweises auf die Patenterteilung: **04.01.2006**
(21) Anmeldenummer: 01974279.0
(22) Anmeldetag: 21.09.2001
(51) Int. Cl.: B60H 1/00

(54) **HEIZ- UND GEGEBENENFALLS KLIMAGERÄT FÜR NUTZFAHRZEUGE, Z.B. OMNIBUSSE**
HEATING DEVICE OPTIONALLY COOLING DEVICE FOR COMMERCIAL VEHICLES, FOR EXAMPLE BUSES
APPAREIL DE CHAUFFAGE ET EVENTUELLEMENT DE CLIMATISATION DESTINE A DES VEHICULES UTILITAIRES, TELS QUE DES AUTOBUS

(30) Priorität: 21.09.2000 DE 10046935
(43) Veröffentlichungstag der Anmeldung: 11.06.2003
(73) Patentinhaber: Thermo King Deutschland GmbH, 68766 Hockenheim (DE)
(72) Erfinder: Kamuf, Klaus, 68789 St. Leon-Rot (DE)
(74) Vertreter: Schirdewahn, Jürgen
(86) Internationale Anmeldenummer: PCT/EP2001/010957
(87) Internationale Veröffentlichungsnummer: WO 2002/024478

(56) Entgegenhaltungen:
- CH-A- 402 626
- DE-A- 3 033 114
- DE-A- 19 835 287

## Beschreibung

Die Erfindung betrifft ein Heiz- und gegebenenfalls Klimagerät für Nutzfahrzeuge. Ein Klimagerät bildet dabei ein Heizgerät dadurch weiter, daß nicht nur eine Heizeinrichtung für das Nutzfahrzeug, sondern auch eine Kühleinrichtung für das Nutzfahrzeug zur Verfügung gestellt wird. Insbesondere soll das Gerät zur Heizung und gegebenenfalls Kühlung eines Omnibusses vorgesehen sein. Das Nutzfahrzeug kann aber auch von jeder anderen bekannten Art sein, z.B. ein Lastkraftwagen, ein Sattelschlepper, eine Zugmaschine, ein Arbeitsfahrzeug wie z.B. eine Baumaschine oder ein landwirtschaftliches Gerät usw. Ein besonderer Anwendungsfall ist dabei die Heizung und gegebenenfalls Klimatisierung des Platzes des Fahrers des Nutzfahrzeugs. Hierbei kann das Gerät beispielsweise im Aufbau des Armaturenbrettes mit einbezogen sein. Allgemein kann das Gerät aber auch als Unterflurgerät angeordnet oder im Dachaufbau des Nutzfahrzeugs einbezogen sein.

Heiz- und gegebenenfalls Klimageräte für Nutzfahrzeuge sind schon wegen der aufzubringenden Heiz- und gegebenenfalls Kühlleistung aufwendiger und damit auch voluminöser aufgebaut als bei Personenkraftfahrzeugen. Es ist dabei konventionell, derartige Geräte einzeln oder in kleiner Auflage kunden- und/oder fahrzeugspezifisch zu fertigen. Zur Kostenersparnis hat man auch schon einen modularen Aufbau mit den Merkmalen des Oberbegriffs von Anspruch 1 vorgesehen. Dabei wurden die einzelnen Module aus abgekanteten Stahlblechen zusammengesetzt, deren Abkantungen zur Verbindung benachbarter Wandteile umgekröpfte Schenkel sind. Die Verbindung der Stahlbleche untereinander und miteinander zwischen aneinander angrenzenden Modulen erfolgte dabei durch Nieten oder Punktschweißung (Neoplan Jet- und Cityliner) an benachbarten umgekröpften Schenkeln. Hierbei erhielt man eine Herstellungsvereinfachung gegenüber individueller Fertigung dadurch, daß Einheiten unterschiedlicher Funktion des Gerätes modular vorgefertigt werden konnten und ferner die Möglichkeit bestand, in unterschiedlichen Modulen gleichartige Wandteile einzusetzen. Im aus den Modulen zusammengesetzten Zustand entsteht dabei ein unzerlegbares Gerät, welches aus den einzelnen Modulen in linearer Hintereinanderreihung zusammengesetzt ist.

Der Erfindung liegt die Aufgabe zugrunde, bei einem Gerät der genannten Art die Wartungsfreundlichkeit zu verbessern. Außerdem soll die Standardisierung der Einzelteile der Module verbessert werden. Ferner soll die Herstellbarkeit vereinfacht werden. Weiter soll die Anzahl der in Frage kommenden Materialien des Gehäuseaufbaus der Module vergrößert werden, beispielsweise um durch entsprechende Materialwahl im Vergleich mit Stahlblechen von vornherein eine Korrosionsunempfindlichkeit zu erhalten. Schließlich soll mit einfachen Mitteln die Möglichkeit geschaffen werden, nicht nur Module mit von der üblichen Quaderform abweichenden Gestalt zu bilden, sondern auch aneinander angrenzende Module unter relativer Abwinklung aneinander anzuschließen.

Diese Aufgabe wird bei einem Gerät mit den Merkmalen des Oberbegriffs von Anspruch 1 gemäß dessen kennzeichnenden Merkmalen gelöst.

Bei dem Gerät gemäß der Erfindung ist die Wartungsfreundlichkeit dadurch gegeben, daß sich die Fügeverbindungen bei der Montage einfach herstellen und bei der Demontage leicht lösen lassen. Dadurch kann man nicht nur einzelne Module leicht voneinander trennen, sondern auch das Gehäuse eines bestimmten Moduls leicht öffnen oder gar weiter zerlegen. Fügeverbindungen dieser Art sind außerdem im Zuge der Herstellung des Geräts schnell und einfach zusammenzusetzen. Soweit einklappbare Fügeverbindungen vorgesehen sind, entfällt sowohl bei der Montage als auch bei der Demontage die bei Schiebeverbindungen gegebene Notwendigkeit, in Verlängerung der Schiebeachse einen relativ großen Montageraum bereitstellen zu müssen. Die immer noch erforderlichen Schiebeverbindungen, welche beispielsweise zum Schließen eines Moduls zu verwenden sind, können dabei auf ein Minimum reduziert werden. Die Profilstäbe und die Wandteile lassen sich für alle in Frage kommenden Anwendungsfälle in relativ kleiner Anzahl standardisiert vorrätig halten oder im Schadensfalle ersetzen. Außerdem besteht keine Materialeinschränkung mehr auf vernietbare oder verschweißbare Gehäusematerialien, wie bisher die mit einer Korrosion verhindernden Beschichtung versehenen abgewinkelten Stahlbleche. Korrosion infolge unterschiedlicher leitfähiger Materialien im Bereich der Fügeverbindungen läßt sich durch eine nicht leitende Zwischenlage in einfacher Weise verhindern, wofür sich eine eingeschachtelte Dichtleiste besonders anbietet. Es lassen sich dabei außer quaderartigen Modulen, die nach wie vor in Frage kommen, in einfacher Weise auch Module mit abweichender räumlicher Gestalt, z.B. mit einer abgekanteten Seite des Quaders, in Pyramidenform u. dgl. gestalten. Außerdem kann man die Profilstäbe in einfacher Weise so gestalten, daß auch eine seitliche Ansetzbarkeit an ein benachbartes Modul oder gar mehrere davon möglich ist. Als vorteilhaften Nebeneffekt erhält man dabei, daß die Profilstäbe eine formstabile Versteifung des ganzen Gerätes herstellen, so daß die Wandteile einen geringeren Anteil der Formstabilität des ganzen Moduls bzw. des ganzen Gerätes als in dem bekannten Fall der Verwendung abgekanteter Stahlbleche beitragen brauchen und dadurch schwächer ausgebildet sein können. Trotzdem bleibt es möglich, weiterführende Einheiten nicht nur an einzelne Wandteile anschliessen zu können, sondern dort auch durch Weiterführung des Gedankens der Verwendung einer lösbaren Fügeverbindung die Zerlegbarkeit und damit die Wartungsfreundlichkeit zu gewährleisten.

Schiebeverbindungen zwischen Gehäuseteilen eines Klimagerätes sind an sich bekannt (DE 198 02 055 A1 und DE 198 35 287 A1). Es ist auch an sich bekannt (DE 196 14 029 A1), bei Heizluftführungen von einem Gehäuse unabhängig gefertigte Dichtleisten einzubauen.

Bei der Verwendung von Schiebeverbindungen kann deren jeweilige endgültige Montagestellung beispielsweise durch einen Endanschlag vorgegeben sein. Eine solche Schiebeverbindung kann ohne weitere Manipulation bei der Herstellung und auch beim Lösen einfach wieder auseinandergezogen werden. Zu einem großen Anteil sind noch einfacher bedienbare Einklappverbindungen vorgesehen. Diese können beispielsweise rings um das Modul mit Ausnahme eines Ortes vorgesehen sein, wo dann beispielsweise eine Schiebeverbindung besteht. Dadurch erhält man immer noch einen in sich stabilen Gerüstaufbau des ganzen Moduls. Man kann dabei die Profilstäbe so gestalten, daß derselbe Profilstab für die Herstellung einer Schiebeverbindung als auch für die Herstellung einer Einklappverbindung genutzt werden kann.

Der erwähnte Endanschlag für die Endstellung einer Schiebeverbindung stellt nur eine Möglichkeit eines Hilfsprofils dar, welches bei der betreffenden Fügeverbindung die gewünschte örtliche Zuordnung der zusammengefügten Teile fördert bzw. gewährleistet. Es kommen auch noch andere Ausbildungen von Hilfsprofilen in Frage, wie dem durchschnittlichen Fachmann bekannt ist. So kann man insbesondere bei Einklappverbindungen die gewünschte örtliche Zuordnung der zusammengefügten Teile durch Rasteinrichtungen gewinnen. Allgemein kann man auch Führungsprofile vorsehen, die beim Zusammenfügen die gewünschte örtliche Zuordnung der zusammengefügten Teile durch selbsttätige Steuerung der Fügebewegung entstehen lassen.

Die Erfindung wird im folgenden anhand schematischer Zeichnungen an Ausführungsbeispielen noch näher erläutert. Es zeigen:
Fig. 1 eine Draufsicht auf eine erste Ausführungsform und
Fig. 2 eine Draufsicht auf eine demgegenüber abgewandelte zweite Ausführungsform eines erfindungsgemäßen Klimageräts;
Fig. 3 einen Teilschnitt durch eine Eckverbindung eines Moduls in vergrößertem Maßstab und
Fig. 4 einen nochmal vergrößerten Teilschnitt einer zwischen zwei zusammengefügten Teilen, nämlich einem Profilstab und eines Wandteils, ausgebildeten Rastverbindung in der zusammengefügten Endstellung.

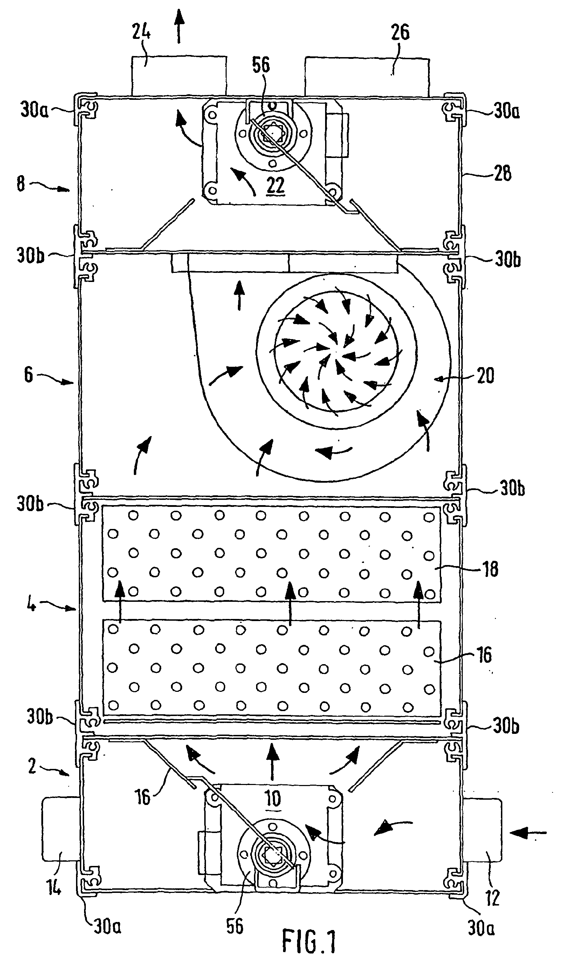

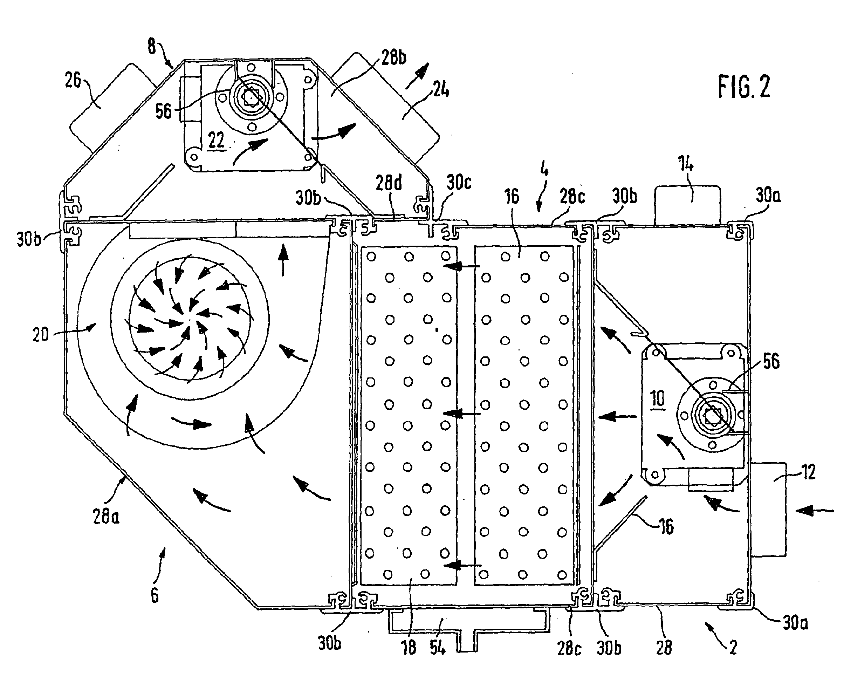

Die beiden in den Figuren 1 und 2 dargestellten Ausführungsformen eines Klimageräts für Omnibusse stimmen in folgendem überein:

Beide Figuren zeigen eine vertikale Darstellung. Das bedeutet, daß das Klimagerät jeweils in der dargestellten Weise vertikal in den Omnibus eingebaut werden kann. Hier kommt insbesondere der Einbau im Bereich des Armaturenbrettes in Frage. Bei einem Einbau mit Unterfluranordnung oder am Dach muß dasselbe Gerät in eine horizontale Orientierung umgedacht werden.

Die in den Figuren eingezeichneten Pfeile beschreiben die Durchströmung des Gerätes durch Luft. Diese Luft wird von außen her angesaugt, im Gerät wahlweise erwärmt oder abgekühlt und dann in das Fahrzeuginnere abgegeben.

In Strömungsrichtung dieser Luft gemäß den eingezeichneten Pfeilen ist das Gerät hintereinander aus vier Modulen 2, 4, 6 und 8 zusammengesetzt.

Das Modul 2 nimmt eine Klappeneinheit 10 auf. Diese ist in der dargestellten Einstellung so angeordnet, daß Frischluft über einen äußeren Ansaugstutzen 12 in das Modul 2 eintreten kann. Alternativ in nicht dargestellter Weise kann die Klappeneinheit 10 so eingestellt sein, daß im Umluftbetrieb Luft über einen Ansaugstutzen 14 angesaugt wird. Desgleichen kann die Klappeneinheit 10 so eingestellt sein, daß im vorgewählten Verhältnis Frischluft aus dem Ansaugstutzen 12 und Umluft aus dem Ansaugstutzen 14 gemischt wird.

Aus dem Modul 2 tritt die angesaugte Luft über einen Führungstrichter 16 in den freien stirnseitigen Querschnitt des Moduls 4 ein.

Das Modul 4 enthält zwei axial hintereinander angeordnete Wärmetauscheinheiten 16 und 18, von denen die eine eine Heizeinheit und die andere eine Kühleinheit ist. Welche dieser Einheiten in axialer Folge zuerst und dahinter angeordnet ist, ist im Grundsatz gleich. In der Praxis wird im allgemeinen in Strömungsrichtung zunächst eine Kühleinheit 16 und dann eine Heizeinheit 18 angeordnet, wobei dann, wenn keine Kühlung benötigt wird, die Kühleinheit 16 noch zur Luftentfeuchtung genutzt werden kann. Das gilt sowohl dann, wenn die Heizeinheit 18 in Betrieb ist als auch dann, wenn man nur die Luft entfeuchten möchte.

Aus dem Modul 4 geht die Luft wiederum mit ungedrosseltem Querschnitt in das Modul 6 über, welches eine Gebläseeinheit 20 aufnimmt. Ohne Beschränkung der Allgemeinheit handelt es sich hier um ein einzelnes Radialgebläse oder eine axiale Reihenschaltung solcher Radialgebläse, z.B. von zwei Radialgebläsen. Diese Gebläseeinheit 30 saugt die Luft vom Eingangsstutzen 12 und/oder 14 an und fördert sie in das anschließende Modul 8 weiter. In äquivalenter Weise könnte man auch das Modul 6 zwischen den beiden Modulen 2 und 4 anordnen und dann die Gebläseeinheit 20 als Druckgebläse auslegen.

Wiederum mit ungedrosseltem Querschnitt tritt die Luft dann in das Modul 8 ein, welches wiederum mit einer Klappeneinheit 22 ausgestattet ist. Diese kann grundsätzlich mit der Klappeneinheit 10 baugleich sein, ohne daß das Bedingung ist.

Am Modul 8 sind außen zwei Austrittsstutzen 24 und 26 angeordnet, die wahlweise von der Klappeneinheit 22 mit austretender Luft gespeist werden. Wie im Falle des Moduls 2 kann dabei die Klappeneinheit 22 wahlweise so eingestellt werden, daß sie nur den Austrittsstutzen 24, nur den Austrittsstutzen 26 oder im vorbestimmten Verhältnis beide zugleich mit austretender Luft speist.

Der Austrittsstutzen 24 kann beispielsweise zur Klimatisierung des Fahrerplatzes, der Austrittsstutzen 26 zur Klimatisierung des Beifahrerplatzes bestimmt sein. Ebenso könnte man den einen Austrittsstutzen auch nur beispielsweise dem Fahrerplatz und gegebenenfalls zusätzlich dem Beifahrerplatz zuordnen und den anderen Austrittsstutzen dazu benutzen, die Scheiben der Fahrerkabine klar zu halten. Andere Anwendungsmöglichkeiten einschließlich der Klimatisierung sonst im Fahrzeug, z.B. bei einem Omnibus sonst im Passagierraum, sind grundsätzlich auch möglich.

Die beiden Ausführungsformen der Figuren 1 und 2 unterscheiden sich in ihrer allgemeinen Anordnung in folgendem:

Bei der ersten Ausführungsform gemäß Fig. 1 sind alle Module 2, 4, 6 und 8 vertikal übereinander angeordnet. Diese Anordnung entspricht grundsätzlich der des Standes der Technik, von dem die Erfindung ausgeht.

Ohne Beschränkung der Allgemeinheit sind dabei die beiden Ansaugstutzen 12 und 14 an entgegengesetzten vertikalen Seitenwänden des Moduls 2 und die beiden Austrittsstutzen 24 und 26 an der horizontalen Oberseite des Moduls 8 angeordnet.

Die Aufeinanderfolge der Module 2, 4, 6 und 8 bei der zweiten Ausführungsform gemäß Fig. 2 ist dabei an sich schon neu. Hier sind die drei Module 2, 4 und 6 horizontal nebeneinander angeordnet, während das Modul 8 vertikal über dem Modul 6 und knapp der Hälfte der horizontalen Erstrekkungsweite des Moduls 4 angeordnet ist. Das Modul 8 kann dabei je nach Bedarf auch nur über dem Modul 6 oder auch mit größerer horizontaler Erstreckung über dem Modul 4 angeordnet sein.

Ohne Beschränkung der Allgemeinheit wiederum ist der Ansaugstutzen 12 an der freien vertikalen Wand des Moduls 2 und der Ansaugstutzen 14 an der freien oberen horizontalen Wand des Moduls 2 angeordnet. Das Modul 6 ist in der Zeichnungsebene links unten abgeschrägt, um die in das Modul 6 horizontal einströmende Luft in Weiterführung vertikal nach oben günstig der Gebläseeinheit 20 zuzuführen. Das Modul 8 ist pyramidenförmig oder wenigstens, wie dargestellt, trapezförmig gestaltet, wobei die große Basisfläche unten und die dazu parallele kleine Stirnfläche oben angeordnet sind, an den beiden Schrägflächen, welche die untere Basisfläche und die obere Stirnfläche miteinander verbinden, sind die beiden Austrittsstutzen 24 und 26 angeordnet.

Sonst sind bei beiden Ausführungsformen die übrigen Module quaderförmig gestaltet.

Bei allen Ausführungsbeispielen gilt folgendes:

Soweit die Module 2, 4, 6 und 8 nicht mit ungedrosseltem Querschnitt ineinander übergehen, haben sie durch Wandteile 28 geschlossene Gehäuse. Die Ansaugstutzen 12 und 14 sowie die Austrittsstutzen 24 und 26 sind beispielsweise jeweils an einem derartigen Wandteil 28 mit ausgebildet. Entsprechendes gilt auch für weitere nachfolgend noch beschriebene Elemente.

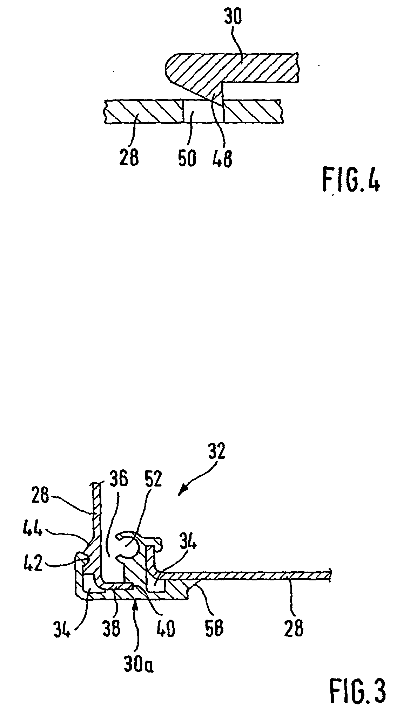

Bei allen Modulen beider Ausführungsformen verlaufen Profilstäbe 30 in horizontaler Richtung bzw. rechtwinklig zur Zeichnungsebene parallel zueinander und spannen zwischen sich jeweils über eine leicht lösbare Fügeverbindung 32, deren bevorzugte Art nachfolgend anhand von Fig. 3 noch näher erläutert wird, Wandteile 28 so auf, daß rechtwinklig zur Zeichnungsebene jeweils eine kanalartige Struktur entsteht. Dort, wo das betreffende Modul ohne Querschnittseinschnürung in das nächst angrenzende Modul übergeht, kann das entsprechende Wandteil dieser kanalartigen Struktur ganz oder teilweise fortgelassen sein.

Parallel zur Zeichnungsebene können diese kanalartigen Strukturen durch deckelartige Wandteile in nicht dargestellter Weise abgeschlossen sein, die durch eine leicht lösbare Verbindung, wobei hier eine Schraubverbindung (vgl. Bezugszeichen 52 in Fig. 3) ausreichend sein kann, mit der jeweiligen Stirnseite des betreffenden Profilstabes 30 verbunden werden kann. Es ist dabei möglich, mehrere dieser benannten kanalartigen Strukturen mit einem einzigen deckelartigen Wandteil 28 abzuschließen.

Die kanalartigen Strukturen weisen bei den quaderförmigen Modulen 2, 4, 6 und 8 gemäß Fig. 1 sowie 2 und 4 gemäß Fig. 2 jeweils vier Profilstäbe 30 auf, von denen je einer an den vier Ecken der im Querschnitt rechteckigen kanalförmigen Struktur angeordnet sind.

Beim zweiten Ausführungsbeispiel gemäß Fig. 2, bei dessen Modulen 6 und 8 der vertikale Querschnitt nicht rechteckig ist, kommt man mit einer geringeren Anzahl von Profilstäben 30 aus. So hat das Modul 6 in Fig. 2 im Bereich seiner Abschrägung links unten in der Zeichnungsebene ein Wandteil 28a, welches einen horizontalen Schenkel, einen abgeschrägten Schenkel und einen vertikalen Schenkel hat und nur mit dem horizontalen Schenkel einerseits und dem vertikalen Schenkel andererseits jeweils in einen Profilstab eingefügt ist.

Bei dem Modul 8 gemäß Fig. 2 ist sogar nur ein einziges Wandteil 28b vorgesehen, welches mit zwei vertikalen Schenkeln jeweils in einen Profilstab 30 eingefügt ist und sonst allein infolge seiner Krümmung den trapezförmigen Querschnitt der kanalförmigen Struktur des Moduls 8 bildet. In diesem Falle sind die beiden Austrittsstutzen 24 und 26 an dem selben Wandteil 28b ausgebildet.

Es sind verschiedene Gestaltungen von Profilstäben 30 vorgesehen, und zwar je nachdem, in welcher Weise Wandteile 28 angeschlossen sind.

Bei den Ausbildungsbeispielen dargestellt sind folgende Typen von Profilstäben 30.

Profilstäbe 30a - die speziell in Fig. 3 dargestellt sind - sind dort vorgesehen, wo Wandteile 28 unter einem rechten Winkel jeweils in den selben Profilstab 30a eingefügt sind. Das ist in Fig. 1 an den beiden unteren Kanten des Moduls 2 und an den beiden oberen Kanten des Moduls 8 und in Fig. 2 an den beiden Kanten rechts außen am Modul 2 der Fall.

Bei einer zweiten Art von Profilstäben 30b schließen jeweils mit einem freien Querschnitt benachbarte Module aneinander an, wobei Wandteile 28 von demselben Profilstab 30b aus in entgegengesetzter Richtung jeweils an einem der beiden Module fortgesetzt sind. Das ist in Fig. 1 zwischen den Modulen 2 und 4, 4 und 6 sowie 6 und 8 sowie in Fig. 2 zwischen den Modulen 2 und 4 sowie 4 und 6 sowie in der Zeichnungsebene links oben auch zwischen den Modulen 6 und 8 der Fall.

Bei dem zweiten Ausführungsbeispiel nach Fig. 2 besteht eine Besonderheit noch in dem Profilstab 30c in der Zeichnungsebene oben am Modul 4. Dieser Profilstab 30c hat drei Fügeverbindungen in drei verschiedenen Richtungen. Zum einen sind hier an demselben Modul 4 zwei in der gleichen Ebene aufeinanderfolgende Wandteile 28c und 28d in derselben Art wie bei den Profilstäben 30b angeordnet. Außerdem ist noch eine zusätzliche Fügeverbindung in rechtwinkliger Richtung dazu, und zwar in der Zeichnungsebene von Fig. 2 nach oben vorgesehen, um den entsprechenden Schenkel des Wandteils 28b einfügen zu können.

Bei anderen Raumformen kann man auch andere Richtungen der Fügeverbindungen, gegebenenfalls auch unter einem schrägen Winkel, vorsehen.

Die Verbindungsarten werden anhand von Fig. 3 deutlich, wo speziell der Profilstab 30a beschrieben ist. Die Abwandlungen der sonstigen Profilstabarten sind dann mit entsprechender anderer Orientierung der Fügungsrichtung entsprechend.

Für jeden anzuschließenden Wandteil 28 bildet der Profilstab 30a einen hinterschnittenen Kanal 34 mit einem Längsschlitz 36, in den ein umgekröpfter Schenkel 36 des jeweils anschließenden Wandteils 28 einsetzbar ist. Durch eine Einklappbewegung kommt dann das freie Ende 38 des Schenkels 36 in Eingriff mit einer innenliegenden seitlichen Nut 40 am Grunde des Kanals 34 und zugleich mit einer Nut 42 an einer äußeren Ausbuchtung 44 des sich in den eigentlichen Wandteil 28 fortsetzenden Körpers des Wandteils 28 in Eingriff mit der außen angeordneten Hinterschneidung 46 des Kanals 34. Die Anordnung ist dabei so getroffen, daß außer der geschilderten Einklappbewegung auch ein axiales Einschieben in die geschilderte Endstellung als Relativbewegung von Profilstab 30a und Wandteil 28 rechtwinklig zur Zeichnungsebene möglich ist. Die relative axiale Endstellung kann dabei mittels Einklinkung eines Verrastungshakens 48 in einem entsprechenden Verrastungsloch 50 einer Verrastungseinrichtung 48,50 zwischen den beiden Teilen 30, 28 bzw. 30a, 28 oder 30b, 28 oder 30c, 28 erfolgen.

An der Stirnseite des jeweiligen Profilstabes 30a (und entsprechend auch der anderen Profilstäbe 30 bzw. 30b bzw. 30c) ist ferner eine axiale Ausnehmung 52 ausgebildet, die Teil einer Verbindungseinrichtung mit dem erwähnten deckelartigen Wandteil 28 ist. Hierzu kann sie entweder Nieten- oder Klemmstifte aufnehmen oder ihrerseits als Schraubgewinde für eine Schraubverbindung gestaltet sein.

Bei der zweiten Ausführungsform ist das untere Wandteil 28c mit einer Ablaufkanaleinrichtung für Kondenswasser zusätzlich ausgebildet. Entsprechendes kann in nicht dargestellter Weise am Modul 4 der ersten Ausführungsform gemäß Fig. 1 in entsprechender räumlicher Anpassung mit ausgebildet sein.

Eine Vereinfachung im Rahmen der Erfindung kann auch bezüglich der Betätigung der Klappeneinheit 10 und 22 von außen her vorgesehen sein. Hierbei kann man gleichartige Klappeneinrichtungen mit gleichartigen Betätigungseinrichtungen verwenden, wobei die Betätigungseinrichtungen je nach der Art des zugehörigen Wandteils unter verschiedenem Winkel in vorgegebenen winkelmäßigen Raststellungen leicht lösbar eingefügt sein können. Die entsprechende Stelleinrichtung 56 kann dabei wahlweise eine manuelle Stellvorrichtung oder ein Stellmotor sein.

In Abwandlung von der geschilderten Ausführungsform gemäß Fig. 3 kann die Ausbuchtung 44 mit der an ihr angebrachten Nut 42 auch an einer gesonderten Dichtleiste 58 zwischen dem Wandteil 28 und der Hinterschneidung am Kanal 34 des betreffenden Profilstabs 30a vorgesehen sein, wie dies mit dem Bezugszeichen 58 in Phantomdarstellung in Fig. 3 eingezeichnet ist.

## Patentansprüche

1. Heiz- und gegebenenfalls Klimagerät für Nutzfahrzeuge, z.B. Omnibusse, mit einem modularen Aufbau aus mindestens zwei Modulen (2, 4, 6, 8), von denen eines (4) eine Wärmetauschereinheit (16, 18) und das andere (6) eine Gebläseeinheit (20) aufnimmt, wobei mindestens ein Eingang (12, 14) und mindestens ein Ausgang (24, 26) für durch die Module geführte Luft vorgesehen sind und insbesondere der Eingang und/oder der Ausgang jeweils als eigenständiges Modul (2, 8) ausgebildet ist bzw. sind, wobei gegebenenfalls dieses eigenständige Modul (2, 8) eine Klappeneinheit (10, 22) aufnimmt, und wobei die einzelnen Module ganz oder weitgehend luftdicht miteinander verbunden und ihrerseits jeweils aus mehreren Wandteilen (28) zusammengesetzt sind, die zur Verbindung benachbarter Wandteile (28) vorgesehene umgekröpfte Schenkel (36) aufweisen,
**gekennzeichnet durch** längs Kanten der Module (2, 4, 6, 8) verlaufende Profilstäbe (30), in welche die umgekröpften Schenkel (36) der Wandteile (28) der einzelnen Module über leicht lösbare Fügeverbindungen (32) eingesetzt sind und die aneinander angrenzenden Modulen gemeinsam sind,
wobei einige der Fügeverbindungen (32) Schiebeverbindungen und einige der Fügeverbindungen (32) Einklappverbindungen sind.

2. Gerät nach Anspruch 1, **dadurch gekennzeichnet, daß** solche Profilstäbe (28) verwendet sind, die sowohl für eine Schiebeverbindung als auch für eine Einklappverbindung ausgebildet sind.

3. Gerät nach Anspruch 1 oder 2, **dadurch gekennzeichnet, daß** für die Schiebeverbindungen und die Einklappverbindungen gleichartige Profilstäbe (28) eingesetzt sind.

4. Gerät nach einem der Ansprüche 1 bis 3, **gekennzeichnet durch** zwischen den Profilstäben (30a) und den abgekröpften Schenkeln (36) der Wandteile (28) eingeschachtelte Dichtleisten (58).

5. Gerät nach einem der Ansprüche 1 bis 4, **dadurch gekennzeichnet, daß** mindestens einige der Profilstäbe (30) Strangpreßprofile sind, vorzugsweise aus Aluminium oder einer Aluminiumlegierung.

6. Gerät nach einem der Ansprüche 1 bis 5, **dadurch gekennzeichnet, daß** mindestens einige der Profilstäbe (30) Spritzgußprofile sind, vorzugsweise aus einem Kunststoff.

7. Gerät nach Anspruch 6, **dadurch gekennzeichnet, daß** die Profilstäbe aus einem glasfaserverstärkten Polyamid bestehen.

8. Gerät nach einem der Ansprüche 1 bis 7, **dadurch gekennzeichnet, daß** mindestens einige Wandteile (28) aus Aluminium oder einer Aluminiumlegierung bestehen.

9. Gerät nach einem der Ansprüche 1 bis 8, **dadurch gekennzeichnet, daß** mindestens einige Wandteile (28) aus einem Kunststoff bestehen, vorzugsweise aus einem Polypropylen.

10. Gerät nach einem der Ansprüche 1 bis 9, **dadurch gekennzeichnet, daß** derselbe Profilstab (30b) für Fügeverbindungen in entgegengesetzte Richtung ausgebildet ist.

11. Gerät nach einem der Ansprüche 1 bis 10, **dadurch gekennzeichnet, daß** derselbe Profilstab für Fügeverbindungen in zueinander abgewinkelte Richtungen (30a, 30c) ausgebildet ist.

12. Gerät nach Anspruch 11, **dadurch gekennzeichnet, daß** derselbe Profilstab (30c) für Fügeverbindungen in mindestens drei verschiedene Richtungen ausgebildet ist.

13. Gerät nach einem der Ansprüche 1 bis 12, **dadurch gekennzeichnet, daß** die Profilstäbe (30) mit Hilfsprofilen (48, 50) ausgebildet sind, welche bei der jeweiligen Fügeverbindung die gewünschte örtliche Zuordnung der zusammengefügten Teile fördern oder gewährleisten.

14. Gerät nach Anspruch 13, **dadurch gekennzeichnet, daß** Hilfsprofile Endanschläge sind.

15. Gerät nach Anspruch 13 oder 14, **dadurch gekennzeichnet, daß** Hilfsprofile als Führungsprofile beim Einfügen ausgebildet sind.

16. Gerät nach einem der Ansprüche 13 bis 15, **dadurch gekennzeichnet, daß** Hilfsprofile als Rasteinrichtungen (48, 50) ausgebildet sind.

17. Gerät nach einem der Ansprüche 1 bis 16, **dadurch gekennzeichnet, daß** der Gehäuseaufbau der Module (2, 4, 6, 8) aus Profilstäben (30) und Wandteilen (28) unter Verwendung gleicher Profilstäbe und/oder Wandteilen in verschiedenen Modulen vergleichmäßigt oder gleich gewählt ist.

18. Gerät nach einem der Ansprüche 1 bis 17, **dadurch gekennzeichnet, daß** mindestens ein Wandteil (28) eines Moduls in einem Teilbereich seiner Wandfläche an eine weiterführende Einheit (54) oder eine Steuereinrichtung (56) über eine Fügeverbindung oder eine andere leicht lösbare Verbindung anschließbar ist.

19. Gerät nach Anspruch 18, **dadurch gekennzeichnet, daß** die weiterführende Einheit eine an die Wärmetauschereinheit seitlich anschließbare Kondenswasserabführung (54) ist.

20. Gerät nach Anspruch 18 oder 19, **dadurch gekennzeichnet, daß** die Steuereinrichtung eine in verschiedenen Winkelstellungen anbringbare Stelleinrichtung (56) für eine Klappeneinheit (10, 22) ist.

21. Gerät nach einem der Ansprüche 1 bis 20, **dadurch gekennzeichnet, daß** mindestens eine Stirnseite des Profilstabs (30, 30a) mit einer vorzugsweise leicht lösbaren Verbindungseinrichtung (52) mit einem Hilfsträger oder direkt mit einem deckelartigen Wandteil versehen ist.

22. Gerät nach einem der Ansprüche 1 bis 21, **gekennzeichnet durch** Zuordnung zum Fahrerplatz und gegebenenfalls Beifahrerplatz des Nutzfahrzeugs.

## Claims

1. An apparatus for heating, and possibly for air-conditioning, commercial vehicles, e.g. busses, having a modular construction of at least two modules (2, 4, 6, 8), one (4) of which houses a heat exchanger unit (16, 18) and the other (6) of which houses a ventilator unit (20), wherein at least one input (12, 14) and at least one output (24, 26) are provided for air which is conveyed through the modules, and, in particular, the input and/or the output is/are each designed to be an independent module (2, 8), wherein said independent module (2, 8) may possibly house a valve unit (10, 22), and wherein the individual modules are connected to each other in a completely or largely airtight manner, and, in turn, are each composed of a plurality of wall portions (28) which have limbs (36) bent over at right angles and provided for the purpose of connecting adjacent wall portions (28),
**characterised by**
profile bars (30) running along edges of the modules (2, 4, 6, 8), into which profile bars are inserted by way of easily releasable jointed connections (32) the limbs (36), which are bent over at right angles, of the wall portions (28) of the individual modules, and which are common to mutually adjacent modules,
wherein some of the jointed connections (32) are slide connections, and some of the jointed connections (32) are retractable connections.

2. An apparatus according to Claim 1, **characterised in that** profile bars (28) are used which are designed both for a slide connection as well as for a retractable connection.

3. An apparatus according to Claim 1 or Claim 2, **characterised in that** the same kind of profile bars (28) are used for the slide connections and for the retractable connections.

4. An apparatus according to one of Claims 1 to 3, **characterised by** sealing strips (58) which are enclosed between the profile bars (30a) and the limbs (36), bent over at right angles, of the wall portions (28).

5. An apparatus according to one of Claims 1 to 4, **characterised in that** at least some of the profile bars (30) are extruded profiles, preferably of aluminium or an aluminium alloy.

6. An apparatus according to one of Claims 1 to 5, **characterised in that** at least some of the profile bars (30) are injection moulded profiles, preferably of a plastics material.

7. An apparatus according to Claim 6, **characterised in that** the profile bars consist of a glass fiber reinforced polyamide.

8. An apparatus according to one of Claims 1 to 7, **characterised in that** at least some of the wall portions (28) consist of aluminium or an aluminium alloy,

9. An apparatus according to one of Claims 1 to 8, **characterised in that** at least some wall portions (28) consist of a plastics material, preferably a polyprapylene.

10. An apparatus according to one of Claims 1 to 9, **characterised in that** the same profile bar (30b) is designed for jointed connections in opposite directions.

11. An apparatus according to one of Claims 1 to 10, **characterised in that** the same profile bar is designed for jointed connections in directions (30a, 30c) which are offset with respect to each other.

12. An apparatus according to Claim 11, **characterised in that** the same profile bar (30c) is designed for jointed connections in at least three different directions.

13. An apparatus according to one of Claims 1 to 12, **characterised in that** the pmfile bars (30) are designed with auxiliary profiles (48, 50) which promote or guarantee the desired local association of the joined together parts in the respective jointed connection.

14. An apparatus according to Claim 13, **characterised in that** auxiliary profiles are end abutments.

15. An apparatus according to Claim 13 or Claim 14, **characterised in that** auxiliary profiles are designed as guide profiles during insertion.

16. An apparatus according to one of Claims 13 to 15, **characterised in that** auxiliary profiles are designed as retaining means (48, 50).

17. An apparatus according to one of Claims 1 to 16, **characterised in that** the housing construction of the modules (2, 4, 6, 8) composed of profile bars (60) and wall portions (28) is homogenised or selected to be the same in the different modules by the use of the same profile bars and/or wall portions.

18. An apparatus according to one of Claims 1 to 17, **characterised in that** at least one wall portion (28) of a module, in a partial region of its wall surface, can be attached to a continuing unit (54) or a control means (56) by way of a jointed connection or another easily releasable connection.

19. An apparatus according to Claim 18, **characterised in that** the continuing unit is a condensation water outlet (54) which can be connected laterally to the heat exchanger unit

20. An apparatus according to Claim 18 or Claim 19, **characterised in that** the control means is an adjustment means (56), which can be set at different angular positions, for a valve unit (10, 22).

21. An apparatus according to one of Claims 1 to 20, **characterised in that** at least one front face of the profile bar (30, 30a.) is provided by means of an easily releasable connection means (52) to an auxiliary carrier or directly to a cover-like wall portion.

22. An apparatus according to one of Claims 1 to 21, **characterised by** its being associated with the driver's seat, and, possibly, with the passenger seat of the commercial vehicle.

## Revendications

1. Dispositif de chauffage et, le cas échéant, de climatisation pour des véhicules utilitaires, ayant une structure modulaire formée d'au moins deux modules (2,4,6,8), dont l'un (4) reçoit une unité d'échange thermique (16,18) et l'autre (6) reçoit une unité de soufflante (20), au moins une entrée (12,14) et au moins une sortie (24,25), pour de l'air guidé par le module, étant prévues et, en particulier, l'entrée et/ou la sortie étant chacune réalisée(s) sous forme de module (2,8) autonome, sachant que, le cas échéant, ce module (2,8) autonome reçoit une unité de clapet (10,22) et les modules individuels étant reliés ensemble, de façon complètement ou largement étanche à l'air, et étant chacun composé, de leur côté, d'une pluralité de parties de parois (28) présentant des branches (36) coudées, prévues pour assurer la liaison entre des parties de paroi (28) voisines,
**caractérisé par**
des barres profilées (30) s'étendant le long des arêtes des modules (2,4,6,8), barres profilées dans lesquelles les branches (36) rabattues des parties de paroi (28) des différents modules sont insérées, par l'intermédiaire de liaisons à jointement (32), aisément désolidarisables et qui sont communes à des module limitrophes entre eux,
quelques unes des liaisons à jointement (32) étant des liaisons à coulissement et quelques unes des liaisons à jointement (32) étant des liaisons à rabattement.

2. Dispositif selon la revendication 1, **caractérisé en ce qu'**on utilise des barres profilées (28) qui sont réalisées, tant pour une liaison par coulissement, qu'également pour une liaison par rabattement.

3. Dispositif selon la revendication 1 ou 2, **caractérisé en ce que** des barres profilées (28) de même type sont utilisées, pour les liaisons par coulissement et les liaisons par rabattement.

4. Dispositif selon l'une des revendications 1 à 3, **caractérisé par** des bandes d'étanchéité (58), emboîtées entre les barres profilées (30a) et les branches (36) repliées des parties de paroi (28).

5. Dispositif selon l'une des revendications 1 à 4, **caractérisé en ce qu'**au moins quelques-unes des barres profilées (30) sont des profilés d'extrusion, de préférence en aluminium ou en alliage d'aluminium.

6. Dispositif selon l'une des revendications 1 à 5, **caractérisé en ce qu'**au moins quelques-unes des barres profilées (30) sont des profilés moulés par injection, de préférence en une matière synthétique.

7. Dispositif selon la revendication 6, **caractérisé en ce que** les barres profilées (28) sont formées d'un polyamide renforcé par des fibres de verre.

8. Dispositif selon l'une des revendications 1 à 7, **caractérisé en ce qu'**au moins quelques parties de paroi (28) sont formées d'aluminium ou d'un alliage d'aluminium.

9. Dispositif selon l'une des revendications 1 à 8, **caractérisé en ce qu'**au moins quelques parties de paroi (28) sont formées d'une matière synthétique, de préférence d'un polypropylène.

10. Dispositif selon l'une des revendications 1 à 9, **caractérisé en ce que** la même barre profilée (30b) est réalisée pour des liaisons par jointement en sens opposé.

11. Dispositif selon l'une des revendications 1 à 10, **caractérisé en ce que** la même barre profilée est réalisée pour des liaisons par jointement, dans des directions (30a,30c) inclinées les unes par rapport aux autres.

12. Dispositif selon la revendication 11, **caractérisé en ce que** la même barre profilée (30c) est réalisée pour des liaisons par jointement en au moins trois directions différentes.

13. Dispositif selon l'une des revendications 1 à 12, **caractérisé en ce que** les barres profilées (30) sont réalisées avec des profilés auxiliaires (48,50) qui, pour la liaison par jointement respective, favorisent ou assurent l'association locale souhaitée des parties assemblées.

14. Dispositif selon la revendication 13, **caractérisé en ce que** des profils auxiliaires sont des butées de fin de course.

15. Dispositif selon la revendication 13 ou 14, **caractérisé en ce que** des profilés sont réalisés sous la forme de profilés de guidage, agissant lors de l'insertion.

16. Dispositif selon l'une des revendications 13 à 15, **caractérisé en ce que** les profilés auxiliaires sont réalisés sous la forme de dispositifs d'encliquetage (48,50).

17. Dispositif selon l'une des revendications 1 à 16, **caractérisé en ce que** la structure de boîtier des modules (2,4,6,8), formée de barres profilées (30) et de parties de parois (28), est homogénéisée ou choisie identique, en utilisant des barres profilées et/ou des parties de paroi identiques dans différents modules.

18. Dispositif selon l'une des revendications 1 à 17, **caractérisé en ce qu'**au moins une partie de paroi (28) d'un module, dans une zone partielle de sa surface de paroi, peut être raccordée à une unité (54) assurant la continuation du guidage, ou à un dispositif de commande (56), par l'intermédiaire d'une liaison à jointement, ou d'une autre liaison aisément désolidarisable.

19. Dispositif selon la revendication 18, **caractérisé en ce que** l'unité continuant le guidage est une évacuation d'eau de condensation (54), susceptible d'être raccordée latéralement à l'unité d'échange thermique.

20. Dispositif selon la revendication 18 ou 19, **caractérisé en ce que** le dispositif de commande est un dispositif de réglage (54), susceptible d'être rapporté en différentes positions angulaires, pour une unité à clapet (10,22).

21. Dispositif selon l'une des revendications 1 à 20, **caractérisé en ce qu'**au moins une face frontale de la barre profilée (30,30a) est munie d'un dispositif de liaison (52), de préférence aisément désolidarisable, avec un support auxiliaire, ou est muni directement d'une partie de paroi du genre d'un couvercle.

22. Dispositif selon l'une des revendications 1 à 21, **caractérisé par** l'association envers la place du conducteur et, le cas échéant, la place du passager du véhicule utilitaire.
